# EUROPEAN PATENT APPLICATION

(11) **EP 2 472 943 A1**
(43) Date of publication of application: **04.07.2012**
(21) Application number: 10788736.6
(22) Date of filing: 30.04.2010
(51) Int. Cl.: H04W 28/06

(54) **METHOD AND SYSTEM FOR MONITORING AND TRACING MULTIMEDIA RESOURCE TRANSMISSION**

(30) Priority: 20.10.2009 CN 200910180572
(71) Applicant: ZTE Corporation, Shenzhen, Guangdong 518057 (CN)
(72) Inventor: YANG, Yong, Shenzhen Guangdong 518057 (CN); XU, Jianguo, Shenzhen Guangdong 518057 (CN); WANG, Qiao, Shenzhen Guangdong 518057 (CN); LU, Wei, Shenzhen Guangdong 518057 (CN)
(74) Representative: Gervasi, Gemma
(86) International application number: PCT/CN2010/072380
(87) International publication number: WO 2010/145340

(57) **Abstract**

The present invention discloses a method and a system for monitoring and tracing transmission of multimedia resources, wherein, said method comprises: capturing data packets in a network link, reassembling the captured data packets to complete the restoration of data streams, and storing the restored data streams into a data stream database; and extracting data fragments from a multimedia file as file DNA fragments to construct a file DNA, and storing the file DNA into a file DNA database; and invoking the file DNA from the file DNA database, and identifying the file DNA fragments of the file DNA in the data streams to get identification results.

## Description

### Technical Field

The present invention relates to the fields of network monitoring, supervision and protection of digital copyrights, and in particular, to a method and a system for monitoring and tracing transmission of multimedia resources.

### Background of the Related Art

In recent years, with the rapid development of the network, the number of digital resources in the network also largely increases, and especially various multimedia resources, including audios, videos and images, etc., are widely and freely transmitted in the network. The wide transmission of the multimedia resources in the network greatly enriches user experience for Internet users; however, the lack of effective supervision of the transmission of the multimedia resources in the network brings many problems and challenges to the copyright protection of the multimedia resources. The copyright owners of the multimedia resources are eager to monitor the transmission of the multimedia resources in the network, so that possible piracy actions can be located and traced.

There are a plurality of transmission forms of the multimedia resources in the network, such as being stored directly in the form of files into a network server for download by users, being transmitted in a Peer-to-Peer (P2P) network via P2P shareware, or being directly watched online by users in the form of streaming media, and so on. However, existing technologies for monitoring the transmission of the multimedia resources are often directed against a certain specific transmission form. For example, multimedia download resources provided on a certain website server are monitored; alternatively, a large number of multimedia download links on web pages by means of a network spider are obtained and monitored; and for another example, in order to monitor a condition of the transmission of the multimedia resources in the P2P network, a client of the P2P shareware can be transformed, to make the client be a P2P network spider, and the network spider can keep obtaining relevant data and information of the multimedia resources in the P2P network, so as to achieve monitoring the transmission of the multimedia resources.

### Summary of the Invention

The technical problem to be solved by the present invention is to provide a method and a system for monitoring and tracing transmission of multimedia resources, so as to realize monitoring a dynamic transmission process of the multimedia resources.

In order to address the aforementioned technical problem, the present invention provides a method for monitoring and tracing transmission of multimedia resources, comprising:
capturing data packets in a network link, reassembling the captured data packets to complete restoration of data streams, and storing the restored data streams into a data stream database; and extracting data fragments from a multimedia file as file DNA fragments to construct a file DNA, and storing the file DNA into a file DNA database; and
invoking the file DNA from the file DNA database, and identifying the file DNA fragments of the file DNA in the data streams to obtain identification results.

Preferably, before capturing data packets, the method further comprising:
configuring a number of data packets needed to be captured in a single capturing process, and a maximum value of a size of a single data packet; allocating a memory space for the captured data packets for caching, according to the number of data packets needed to be captured in a single capturing process, and the maximum value of a size of a single data packet.

Preferably, after capturing data packets and before reassembling the captured data packets, the method further comprising:
parsing the captured data packets according to a data structure of arrival time + header information + payload, and caching the parsed data packets into the memory space;
the arrival time being time at which the data packet is captured; the header information at least comprising 5-tuple information of a transport layer of the data packet; and the payload being valid data of the data packet; and
the 5-tuple information of the transport layer being: a source IP address, a destination IP address, a source port number, a destination port number and a type of a transport layer protocol.

Preferably, said step of reassembling the data packets comprises:
reading the data packets from the memory space; and
creating data streams using the 5-tuple information of the transport layer of a header of the currently read data packet as indexes, and adding the payload of the current data packet into the created data streams to complete the restoration of the data streams.

Preferably, said step of constructing a file DNA comprises:
assembling a plurality of the file DNA fragments as file DNA data; and
using relevant information of the file DNA data as file DNA information, and writing the file DNA information and the file DNA data into a file to form the file DNA.

Preferably, before extracting data fragments from a multimedia file as file DNA fragments, the method further comprises: selecting an extracting mode of the corresponding file DNA fragments according to a type of the multimedia file; and
in said step of extracting data fragments from a multimedia file as file DNA fragments, extracting the file DNA fragments from the multimedia file according to the extracting mode of the file DNA fragments.

Preferably, after constructing the file DNA, the method further comprises:
if a proportion value of a number of non-unique file DNA fragments to a number of all the file DNA fragments in the file DNA is determined to be greater than a preset validity threshold, determining that the file DNA is invalid; and if a proportion value of a number of non-unique file DNA fragments to a number of all the file DNA fragments in the file DNA is determined to be less than a preset validity threshold, determining that the file DNA is valid; and
when the file DNA is invalid, the method further comprising: re-selecting the extracting mode of the file DNA fragments, and re-extracting the file DNA fragments; and
when the file DNA is valid, said step of storing into the file DNA database comprising: storing the file DNA into the file DNA database in a format of the file DNA information + the file DNA data.

Preferably, said step of identifying the file DNA fragments to obtain identification results comprises:
accessing the data stream database, and acquiring the data streams;
when determining that a number of the file DNA fragments identified in the data streams is greater than or equal to a preset threshold, obtaining the identification results, and determining that there is transmission of the multimedia file to which the file DNA fragments belong in a process of network transmission to which the data streams belong; and
when determining that the number of the file DNA fragments identified in the data streams is less than the preset threshold, re-acquiring the data streams from the data stream database.

Preferably, after obtaining the identification results, the method further comprises: storing the identification results into an identification result database; and
the identification results at least comprising: relevant information of the data streams and relevant information of the multimedia file to which the file DNA fragments belong.

In order to address the aforementioned technical problem, the present invention provides a system for monitoring and tracing transmission of multimedia resources, comprising, a data acquiring module, a data stream restoring module, and a data stream database which are connected in turn, a file DNA extracting module and a file DNA database which are connected, and a file DNA identifying module connected with both the data stream database and the file DNA database, wherein,
the data acquiring module is configured to capture data packets in a network link;
the data stream restoring module is configured to reassemble the captured data packets to complete restoration of data streams;
the data stream database is configured to store the restored data streams;
the file DNA extracting module is configured to extract data fragments from a multimedia file as file DNA fragments to construct a file DNA;
the file DNA database is configured to store the file DNA; and
the file DNA identifying module is configured to invoke the file DNA from the file DNA database, and identify the file DNA fragments of the file DNA in the data streams of the data stream database to obtain identification results.

Preferably, the system further comprises: an identification result database, which is configured to store the identification results.

The scheme for monitoring and tracing transmission of multimedia resources in accordance with the present invention achieves monitoring and tracing the transmission of the multimedia files in the network based on the file DNA by identifying file DNA fragments of the monitored multimedia files in data streams of the network. Since the monitored object is data dynamically transmitted in the network instead of some static data sources, an action of data transmission occurring or having occurred just now in the network can be monitored and traced; in addition, the present invention fully takes into account relevant characteristic of the data transmission in a network environment, especially the data pollution due to the network packet loss and the disorder of packet arrivals, and provides a scheme of monitoring and tracing based on the file DNA, wherein, the technical means of verifying the validity of the file DNA, as well as the size of the file DNA fragment being much smaller than that of the data packet, etc., makes the method not only valid but also have better robustness in the network environment.

### Brief Description of Drawings

FIG. 1 is a functional diagram of a system for monitoring and tracing transmission of multimedia resources in accordance with an embodiment of the present invention;
FIG. 2 is a diagram of an application of a file DNA in accordance with an embodiment of the present invention;
FIG. 3 is a structural diagram of a system for monitoring and tracing transmission of multimedia resources in accordance with an embodiment of the present invention;
FIG. 4 is a flow chart of a method for monitoring and tracing transmission of multimedia resources in accordance with an embodiment of the present invention;
FIG. 5 is a flow chart of a method for acquiring network data and restoring data streams in accordance with an embodiment of the present invention;
FIG. 6 is a flow chart of a method for extracting a file DNA in accordance with an embodiment of the present invention; and
FIG. 7 is a flow chart of a method for identifying a file DNA in accordance with an embodiment of the present invention.

### Preferred Embodiments of the Present Invention

At present, the technology for monitoring transmission of multimedia resources is still primarily based on static monitoring of the data sources, and cannot monitor a process of the real dynamic transmission of the multimedia resources, and therefore monitoring a data transmission action which is occurring or has occurred just now in a network can be implemented.

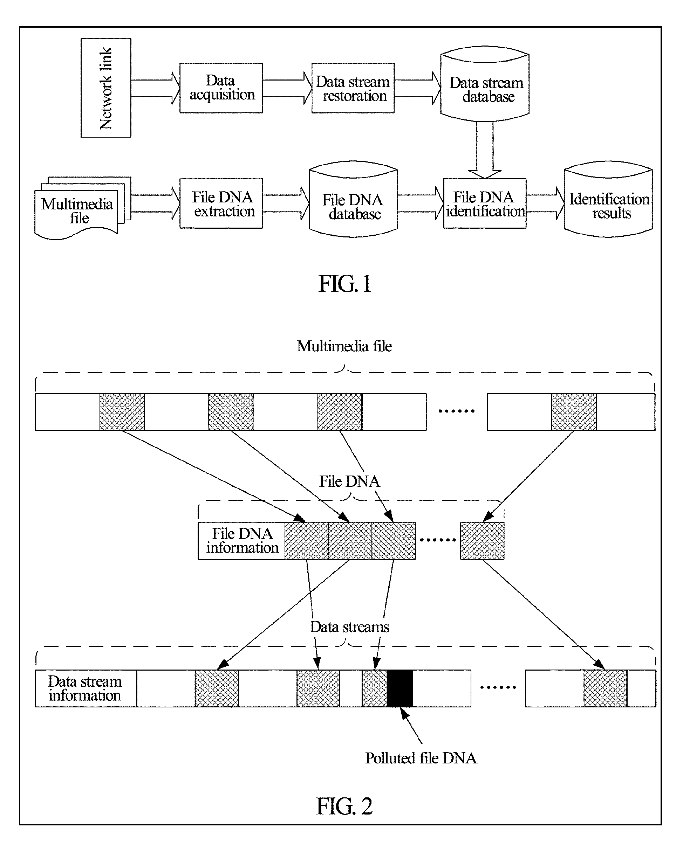

The basic idea of a scheme for monitoring transmission of multimedia resources in accordance with the present invention is as shown in FIG. 1, which comprises capturing (i.e., data acquiring) data packets in a network link at an exit of a local area network, and caching the data packets into a memory in a specific data structure; reading data of the data packets from the memory, reassembling the data packets, so as to complete restoration of data streams; storing the restored data streams into a data stream database, in order to facilitate subsequently accessing and invoking; and, extracting a certain number of file DNA fragments from a multimedia file to construct a file DNA, and storing the file DNA into a file DNA database; invoking a file DNA of a certain specific multimedia file from the file DNA database, then accessing the data stream database, and identifying file DNA fragments of the specific multimedia file in the data streams to obtain identification results, thus achieving monitoring and tracing the transmission of specific multimedia resources.

Wherein, said step of constructing a file DNA and storing the file DNA into a file DNA database can be executed previously, and said steps of acquiring data, restoring data streams and storing them into a data stream database can then be carried out; alternatively, said step of constructing a file DNA and storing the file DNA into a file DNA database can be executed in parallel with said steps of acquiring data, restoring data streams and storing them into a data stream database.

In the aforementioned scheme of monitoring and tracing, the application of the file DNA is the key to realize monitoring and tracing the transmission of the specific multimedia resources, and the file DNA is information for identifying an unique identify of a file. FIG. 2 illustrates a diagram of an application of a file DNA in accordance with the present invention. The parts represented by grids in the figure refer to file DNA fragments. It can be seen from the figure that, the file DNA fragments are just data fragments exacted from the multimedia file, and a certain number of the data fragments can be assembled to form file DNA data of the multimedia file; and the file DNA data and other relevant information, i.e., file DNA information are written into a file all together to form the file DNA. In general, a format of the file DNA is "file DNA information + file DNA data", wherein, the file DNA information at least comprises: the number of the file DNA fragments in this file DNA, and a size (byte) of each file DNA fragment.

A minimum unit of the file DNA is a file DNA fragment, and a size of a file DNA fragment is much smaller than that of a data packet, which usually is dozens of bytes. In the present invention, the identification of the file DNA is identifying file DNA fragments of a certain specific multimedia file which may exists in data streams stored in a data stream database, and if the number of the file DNA fragments of the multimedia file in a certain segment of the data streams is found to be equal to or exceed a preset threshold (the threshold can be determined according to actual requirements, for example the threshold is 3), it can be considered that there is transmission of the multimedia file in a process of network transmission to which the segment of the data streams belong, thus achieving monitoring and tracing the transmission of the specific multimedia resources. Since the size of the file DNA fragment is smaller than that of the data packet, the file DNA is very robust for data pollution due to network packet loss and disorder of data packet arrivals. It can be seen from FIG. 2 that, as long as there are a small part of complete file DNA fragments monitored in the data streams, it can be considered that there is transmission of a specific multimedia file in the data streams with a high probability.

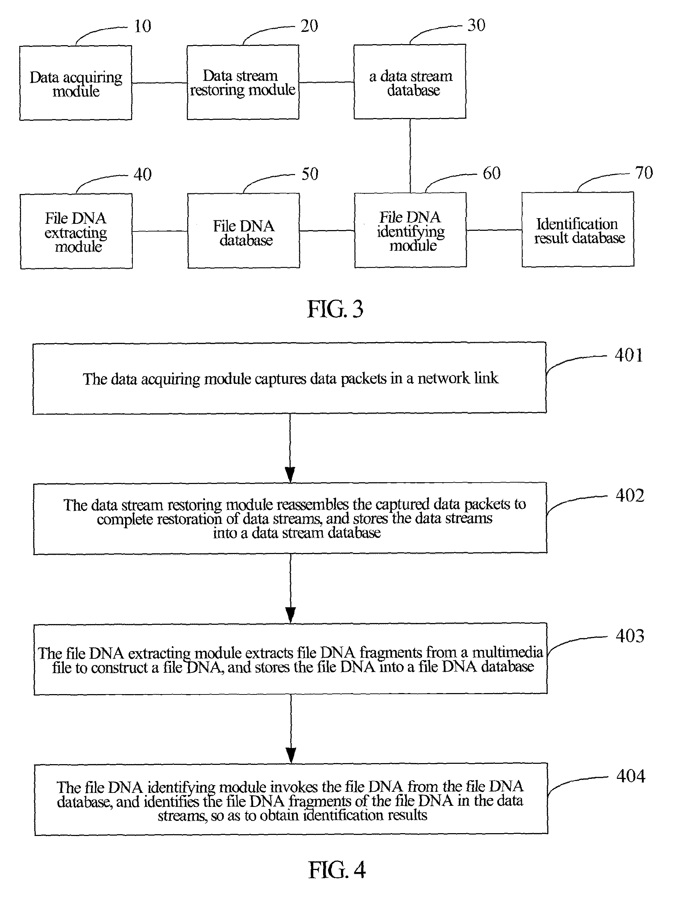

According to the aforementioned scheme for monitoring and tracing transmission of multimedia resources, as shown in FIG. 3, a system for monitoring and tracing transmission of multimedia resources in accordance with the present invention can be divided into the following functional modules: a data acquiring module 10, a data stream restoring module 20, a data stream database 30, a file DNA extracting module 40, a file DNA database 50, a file DNA identifying module 60, and an identification result database 70.

The scheme for monitoring and tracing transmission of multimedia resources in accordance with the present invention will be illustrated in detail in conjunction with the monitoring and tracing system as shown in FIG. 3 hereinafter, and FIG. 4 is a flow chart of a method for monitoring and tracing transmission of multimedia resources in accordance with the present invention, which comprises the following steps.

In Step 401, the data acquiring module captures data packets in a network link.

The data acquiring module captures the data packets in the network link at an exit of a local area network. Further, the captured data packets are cached in a memory in a specific data structure to facilitate subsequent invoking.

In Step 402, the data stream restoring module reassembles the captured data packets to complete restoration of data streams, and stores the data streams into the data stream database.

The data stream restoring module reads data of the data packets captured and cached in the memory in step 401, and reassembles the data packets according to header information of the data packets, so as to complete restoration of the data streams. The restored data streams are stored into the data stream database, to facilitate subsequent accessing and invoking.

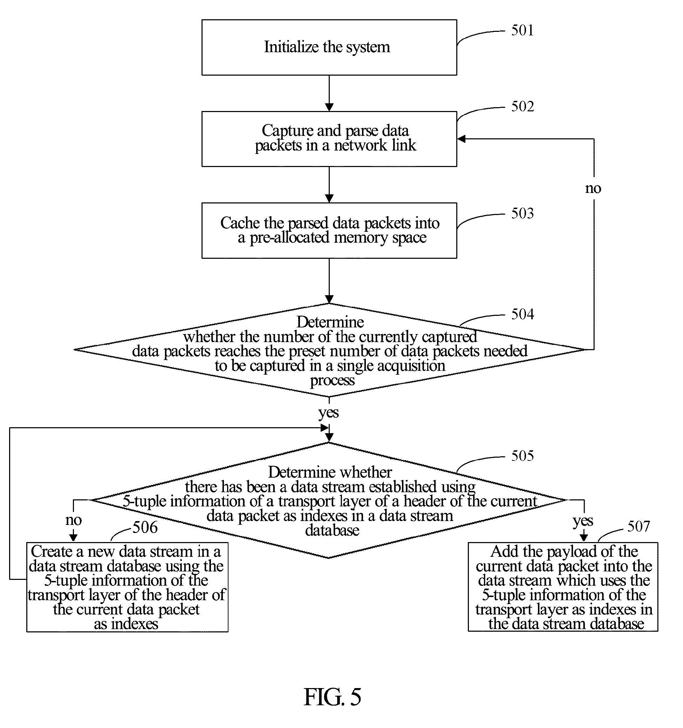

Wherein, the process of acquiring network data (capturing network data packets) described in Step 401 and the process of restoring data streams described in Step 402 will be illustrated in detail in combination with an embodiment of FIG. 5.

In Step 403, the file DNA extracting module extracts file DNA fragments from a multimedia file to construct a file DNA, and stores the file DNA into the file DNA database.

Wherein, Step 403 is not necessarily executed after step 402; alternatively, Step 403 can be executed in parallel with Step 401∼402; alternatively, Step 403 can be executed firstly, i.e., constructing a file DNA at first, and storing one or more file DNAs into the file DNA database, and Step 401∼402 are then executed.

The file DNA extracting module extracts a certain number of file DNA fragments from the multimedia file which construct file DNA data, writes the file DNA data and file DNA information into a file, to construct a file DNA of the multimedia file, and stores the file DNA into the file DNA database.

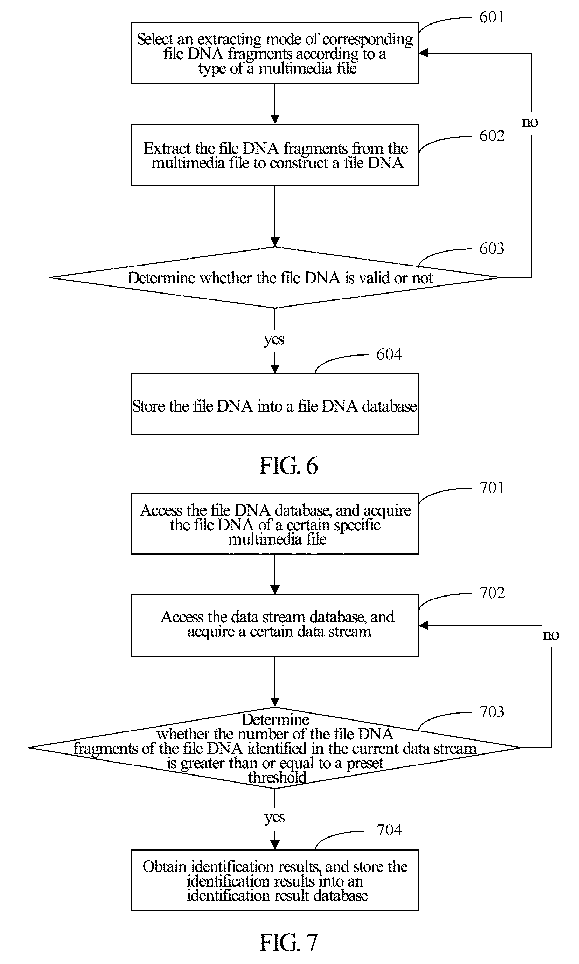

The specific implementation of the step is as shown in FIG. 6.

In Step 404, the file DNA identifying module invokes the file DNA from the file DNA database, and identifies the file DNA fragments of the file DNA in the data streams, to obtain identification results.

The file DNA identifying module invokes the file DNA of a certain specific multimedia file from the file DNA database, and then accesses the data stream database, monitors and identifies the file DNA fragments of the file DNA of the multimedia file in the data streams to obtain the identification results, and once it is found that there is a certain number (which is equal to or exceeds a threshold) of the file DNA fragments of the multimedia file in the data streams, it can be determined that there is transmission of the certain multimedia file in a process of network transmission to which the data streams belong, thus achieving monitoring and tracing the transmission of the specific multimedia resources in the network.

Preferably, when the aforementioned identification results are stored into a specific identification result database, users can monitor and trace the transmission of multimedia resources based on information of the identification result database.

The specific implementation of the step is as shown in FIG. 7.

FIG. 5 is a flow chart of a method for acquiring network data and restoring data streams in accordance with the present invention, the specific steps are as follows.

In Step 501, the system is initialized.

The step is primarily used to configure relevant parameters of network data acquisition in a system and allocate a memory space used to store the network data, before the data acquiring module starts to capture data packets.

Wherein, the configured relevant parameters of network data acquisition at least comprise: the number of data packets needed to be captured in a single acquisition process and the maximum value (byte) of a size of a single data packet; and the allocated memory space is relevant to the aforementioned two parameters. For example, if the number of data packets captured in a single acquisition process is N and the maximum of a single data packet is m bytes, a size of the allocated memory space is N*m bytes.

When the data acquiring module receives an instruction of starting to capture the data packets, perform Step 502, and start to capture the data packets; otherwise, wait.

In Step 502, the data packets in the network link are captured and parsed.

At first, the data acquiring module sets a network card as a promiscuous mode, and then captures the original data packets in the network link at an exit of a local area network.

When a data packet is captured, the data acquiring module parses the data packet according to the TCP/IP protocol. The parsed data packet exists in a data structure of " + header information + payload". Wherein, the arrival time refers to a time at which the data packet is captured; the header information refers to information of a header of the data packet, and primarily is the 5-tuple information of the transport layer, i.e., a source IP address, a destination IP address, a source port number, a destination port number and a type of the transport protocol (TCP or UDP); and the payload refers to valid data of the data packet.

In Step 503, the parsed data packet is cached into the pre-allocated memory space.

The data acquiring module caches the parsed data packet in a specific data structure, i.e., the data structure of "arrival time + header information + payload", into the memory space pre-allocated in Step 501. In the memory, according to the arrival time of the data packet, the data packet arriving at the earlier time is cached first, and the data packet arriving at the later time is then cached.

A size of the memory space occupied by each data packet is a fixed value (that is the maximum value of a size of a single data packet). If the pre-allocated maximum value of a size of a single data packet is m bytes, the size of the memory space occupied by the data packet is m bytes, regardless of the current size of the data packet reaching m bytes.

In Step 504, whether the number of the currently captured data packets reaches the preset number of data packets needed to be captured in a single acquisition process or not is determined; and if no, return to Step 502; and if yes, perform Step 505.

In the current acquisition process, the data acquiring module captures the data packets according to the preset number of data packets needed to be captured in a single acquisition process, until the number of the captured data packets meets the requirement, the current acquisition process ends, and perform Step 505; otherwise, continue the current acquisition process, and return to perform Step 502.

In Step 505, the 5-tuple information of the transport layer of the header of the data packet in the memory is read, and whether there has been a data stream established using the 5-tuple information of the transport layer of the header of the current data packet as indexes or not is determined; and if no, perform Step 506; and if yes, perform Step 507.

Specifically, when the data stream restoring module reads the data packets in the memory, according to the arrival time, the data packet arriving at the earlier time is read first, and the one arriving at the later time is then read.

In the present invention, the data streams stored in the data stream database uses the 5-tuple information of the transport layer of the header of the data packet included therein as indexes. Therefore, the data stream restoring module needs to determine whether the currently read 5-tuple information of the transport layer of the header of the data packet is used as indexes of a certain data stream or not, i.e., determining whether there has been a data stream established using the current 5-tuple information of the transport layer of the header of the data packet as indexes or not, and if yes, perform Step 507; and if no, perform Step 506.

In Step 506, a new data stream is created in the data stream database using the current 5-tuple information of the transport layer of the header of the data packet as indexes.

If there is not any data stream using the 5-tuple information of the transport layer as indexes, it is needed to create the data stream, i.e., creating the data stream using the header information of the current data packet, which mainly is the 5-tuple information of the transport layer, i.e., a source IP address, a destination IP address, a source port number, a destination port number and a type of the transport protocol (TCP or UDP), as indexes, and then return to Step 505.

In Step 507, the payload of the current data packet, i.e., the valid data of the data packet, is added into data streams which uses the 5-tuple information of the transport layer as indexes in the data stream database.

When there is a data stream using the 5-tuple information of the transport layer as indexes in the current data stream database, it is needed to add the payload of the data packet into the data stream.

It can be known from the process that, the restoration process of a data stream is: at first, creating a data stream using the read 5-tuple information of the transport layer of the header of the data packet as indexes, and then adding the payload of the data packet into the data stream, thus completing reassembling of the data stream, i.e., complementing the restoration of the data stream.

FIG. 6 is a flow chart of a method for extracting a file DNA in accordance with the present invention, and specific steps are as follows.

In Step 601, an extracting mode of corresponding file DNA fragments is selected according to a type of a multimedia file.

Before extracting the file DNA fragments, the file DNA extracting module should determine the type of the multimedia file at first, for example, the type of the multimedia file is an image, a video, or an audio and so on.

The extracting mode of the file DNA fragments comprises even extracting, random extracting and so on. Even extracting refers to extracting a certain number of file DNA fragments in a multimedia file at an interval, while random extracting refers to extracting file DNA fragments randomly in a multimedia file anywhere. The principle of selecting the extracting mode is to make the file DNA fragments extracted in this way are fragments of a data field of the multimedia file as many as possible, rather than fragments of a format field, thus ensuring uniqueness of the file DNA fragments.

In an application, users can set a corresponding relationship between a type of a multimedia file and an extracting mode of file DNA fragments according to actual requirements.

In Step 602, the file DNA fragments are extracted from the multimedia file to construct a file DNA.

According to the selected extracting mode of the file DNA fragments, the file DNA extracting module extracts the file DNA fragments from the multimedia file, to construct the file DNA, and a specific implementation is the embodiment as shown in FIG. 2.

In Step 603, whether the file DNA is valid or not is determined, and if no, return to step 601; and if yes, perform step 604.

The step, i.e., verifying the validity of the file DNA, is to monitor and identify whether the extracted file DNA fragment is unique or not in the multimedia file, and if a certain file DNA fragment of the file DNA is not unique in the multimedia file, it means that the file DNA fragment probably belongs to the format field, and if more than a certain number of the file DNA fragments are not unique, the file DNA is probably invalid, then return to step 601, re-select the extracting mode of the file DNA fragments, and re-extract the file DNA fragments; otherwise, perform step 604.

When determining the validity of the file DNA, a validity threshold can be determined according to factors such as actual network environment and so on, and the threshold is an empirical value, which is a maximum value of proportion of the number of non-unique file DNA fragments to the number of all the file DNA fragments. Assume that the number of the file DNA fragments of a certain multimedia file is twenty, when the network environment is good, all of twenty file DNA fragments can be extracted, and if ten file DNA fragments therein are not unique, the file DNA can also be determined to be valid, and at this time the validity threshold is set as 50%; and if the network environment is bad, when only three file DNA fragments are captured and one file DNA fragment therein is not unique, the file DNA can be determined to be invalid, and at this time the validity threshold can be set as 30%.

When the value of the proportion of the number of the non-unique file DNA fragments to the number of all the file DNA fragments is greater than the validity threshold, the file DNA is determined to be invalid, and return to step 601; otherwise, perform step 604.

In Step 604, the file DNA is stored into the file DNA database.

In addition, the file DNA is stored in a format of "file DNA information + file DNA data" into the file DNA database.

In the process, after the file DNA fragments are extracted, the validity of the file DNA is s further needed to be verified, and in this way the extracted file DNA has better robustness in the subsequent process of monitoring and tracing.

FIG. 7 is a flow chart of a method for identifying a file DNA in accordance with the present invention, and specific steps are as follows.

In Step 701, the file DNA database is accessed, and a file DNA of a certain specific multimedia file is acquired.

The file DNA identifying module acquires the file DNA of the certain specific multimedia file from the file DNA database at first.

In Step 702, the data stream database is accessed, and a certain data stream is acquired.

In Step 703, whether the number of the file DNA fragments of the file DNA identified in the current data stream is greater than or equal to a preset threshold (for example, the threshold is three) is determined, and if yes, perform Step 704; otherwise, return to the step 702, that is, read another data stream again from the data stream database for identification.

In Step 704, identification results are obtained, and the identification results are stored into an identification result database.

Once it is found that there is a certain number (which is equal to or exceeds the threshold) of the file DNA fragments of the multimedia file in the data stream, it is determined that there is transmission of the specific multimedia file in a process of network transmission to which the data stream belongs. Therefore, the identification results, such as relevant information of the data stream (a size of the data stream, a source IP address, a destination IP address and so on), relevant information of the multimedia file (a type of the multimedia file, a source IP address, a destination IP address and so on) can be stored into the identification result database for user reference.

Although the present invention is illustrated in combination with the specific embodiments, modification and changes can be made to the present invention for those skilled in the art without departing from the spirit or scope of the present invention. Such modifications and variations should be construed as being within the scope of the present invention and the scope of the appended claims.

### Industrial Applicability

A method and a system for monitoring and tracing transmission of multimedia resources are provided in the present invention, which achieve monitoring and tracing the transmission of the multimedia files in the network based on the file DNA by identifying file DNA fragments of the monitored multimedia files in data streams of the network. Since the monitored object is data dynamically transmitted in the network instead of some static data sources, an action of data transmission occurring or having occurred just now in the network can be monitored and traced; in addition, the present invention fully takes into account relevant characteristic of the data transmission in a network environment, especially the data pollution due to the network packet loss and the disorder of packet arrivals, and provides a scheme of monitoring and tracing based on the file DNA, wherein, the technical means of verifying the validity of the file DNA, as well as the size of the file DNA fragment being much smaller than that of the data packet, etc., makes the method not only valid but also have better robustness in the network environment.

## Claims

1. A method for monitoring and tracing transmission of multimedia resources, comprising:
capturing data packets in a network link, reassembling the captured data packets to complete restoration of data streams, and storing the restored data streams into a data stream database; and extracting data fragments from a multimedia file as file DNA fragments to construct a file DNA, and storing the file DNA into a file DNA database; and
invoking the file DNA from the file DNA database, and identifying the file DNA fragments of the file DNA in the data streams to obtain identification results.

2. The method for monitoring and tracing transmission of multimedia resources of claim 1, wherein, before capturing data packets, the method further comprises:
configuring a number of data packets needed to be captured in a single capturing process, and a maximum value of a size of a single data packet; allocating a memory space for the captured data packets for caching, according to the number of data packets needed to be captured in a single capturing process, and the maximum value of a size of a single data packet.

3. The method for monitoring and tracing transmission of multimedia resources of claim 2, wherein, after capturing data packets and before reassembling the captured data packets, the method further comprises:
parsing the captured data packets according to a data structure of arrival time + header information + payload, and caching the parsed data packets into the memory space;
the arrival time being a time at which the data packet is captured; the header information at least comprising 5-tuple information of a transport layer of the data packet; and the payload being valid data of the data packet; and
the 5-tuple information of the transport layer being: a source IP address, a destination IP address, a source port number, a destination port number and a type of a transport layer protocol.

4. The method for monitoring and tracing transmission of multimedia resources of claim 3, wherein, said step of reassembling the data packets comprises:
reading the data packets from the memory space; and
creating data streams using the 5-tuple information of the transport layer of a header of the currently read data packet as indexes, and adding the payload of the current data packet into the created data streams to complete the restoration of the data streams.

5. The method for monitoring and tracing transmission of multimedia resources of claim 1, wherein, said step of constructing a file DNA comprises:
assembling a plurality of the file DNA fragments as file DNA data; and
using relevant information of the file DNA data as file DNA information, and writing the file DNA information and the file DNA data into a file to form the file DNA.

6. The method for monitoring and tracing transmission of multimedia resources of claim 5, wherein, before extracting data fragments from a multimedia file as file DNA fragments, the method further comprises: selecting an extracting mode of the corresponding file DNA fragments according to a type of the multimedia file; and
in said step of extracting data fragments from a multimedia file as file DNA fragments, extracting the file DNA fragments from the multimedia file according to the extracting mode of the file DNA fragments.

7. The method for monitoring and tracing transmission of multimedia resources of claim 5, wherein, after constructing the file DNA, the method further comprises:
if a proportion value of a number of non-unique file DNA fragments to a number of all the file DNA fragments in the file DNA is determined to be greater than a preset validity threshold, determining that the file DNA is invalid; and if a proportion value of a number of non-unique file DNA fragments to a number of all the file DNA fragments in the file DNA is determined to be less than a preset validity threshold, determining that the file DNA is valid; and
when the file DNA is invalid, the method further comprising: re-selecting the extracting mode of the file DNA fragments, and re-extracting the file DNA fragments; and
when the file DNA is valid, said step of storing into the file DNA database comprising: storing the file DNA into the file DNA database in a format of the file DNA information + the file DNA data.

8. The method for monitoring and tracing transmission of multimedia resources of claim 1, wherein, said step of identifying the file DNA fragments to obtain identification results comprises:
accessing the data stream database, and acquiring the data streams;
when determining that a number of the file DNA fragments identified in the data streams is greater than or equal to a preset threshold, obtaining the identification results, and determining that there is a transmission of the multimedia file to which the file DNA fragments belong in a process of network transmission to which the data streams belong; and
when determining that the number of the file DNA fragments identified in the data streams is less than the preset threshold, re-acquiring the data streams from the data stream database.

9. The method for monitoring and tracing transmission of multimedia resources of claim 8, wherein, after obtaining the identification results, the method further comprises: storing the identification results into an identification result database; and
the identification results at least comprising: relevant information of the data streams and relevant information of the multimedia file to which the file DNA fragments belong.

10. A system for monitoring and tracing transmission of multimedia resources, comprising, a data acquiring module, a data stream restoring module, and a data stream database which are connected in turn, a file DNA extracting module and a file DNA database which are connected, and a file DNA identifying module connected with both the data stream database and the file DNA database, wherein,
the data acquiring module is configured to capture data packets in a network link;
the data stream restoring module is configured to reassemble the captured data packets to complete restoration of data streams;
the data stream database is configured to store the restored data streams;
the file DNA extracting module is configured to extract data fragments from a multimedia file as file DNA fragments to construct a file DNA;
the file DNA database is configured to store the file DNA; and
the file DNA identifying module is configured to invoke the file DNA from the file DNA database, and identify the file DNA fragments of the file DNA in the data streams of the data stream database to obtain identification results.

11. The system for monitoring and tracing transmission of multimedia resources of claim 10, further comprising: an identification result database, which is configured to store the identification results.
